# FASCICULE DE BREVET EUROPEEN

(11) **EP 1 020 792 B1**
(45) Date de publication et mention de la délivrance du brevet: **10.04.2002**
(21) Numéro de dépôt: 00470001.9
(22) Date de dépôt: 06.01.2000
(51) Int. Cl.: G06F 7/72, G06F 7/52

(54) **Circuit de multiplication effectuant des multiplications aussi bien classiques que dans les corps de Galois**
Multiplizierschaltung die sowohl gewöhnliche, als auch Galoisfeld-Multiplikation ausführen kann
Multiplier circuit performing ordinary as well as Galois field multiplication

(30) Priorité: 15.01.1999 FR 9900472
(43) Date de publication de la demande: 19.07.2000
(73) Titulaire: STMicroelectronics S.A., 92120 Montrouge (FR)
(72) Inventeur: Romain, Fabrice, 57000 Metz (FR); Monier, Guy, 57000 Metz (FR); Lepareux, Marie-Noelle, 57000 Metz (FR)
(74) Mandataire: Ballot, Paul

(56) Documents cités:
- WO-A-98/48345
- DE-A- 19 644 688

## Description

L'invention concerne un circuit de multiplication dans un corps de Galois. Plus particulièrement, l'invention se rapporte à un circuit de multiplication destiné à effectuer des multiplications dans le corps de Galois GF(2ⁿ) généré à l'aide d'un polynôme générateur.

Les corps de Galois sont des ensembles finis d'éléments sur lesquels les opérations mathématiques sont définies différemment. Le corps de Galois GF(2ⁿ) est un corps qui comporte N éléments, avec N = 2ⁿ. Une représentation de ce corps est la représentation pôlynomiale. Tous les éléments s'écrivent sous la forme d'un polynôme de degré n-1: aₙ₋₁Xⁿ⁻¹ + aₙ₋₂Xⁿ⁻² + ... + a₂X² + a₁X + a₀, avec aᵢ un coefficient appartenant à GF(2) et donc égal soit à "0", soit à "1". De ce fait, chaque élément peut être assimilé à un nombre codé sur n bits. Cela a pour effet que les calculs effectués sur les différents éléments correspondent à des calculs réalisés sur des polynômes réduits à l'aide d'un polynôme irréductible de degré n. Les calculs effectués, sur les nombres codés sur huit bits représentant les éléments du corps, se déroulent différemment des opérations classiques.

Ainsi l'addition de deux éléments se fait bit à bit à l'aide d'un OU-EXCLUSIF. La soustraction se fait de manière identique à une addition. La multiplication s'effectue en deux temps. Dans un premier temps, on effectue une multiplication similaire à une multiplication normale, puis, dans un deuxième temps, on effectue une réduction à l'aide du polynôme générateur.

Les corps de Galois sont utilisés en transmission numérique pour réaliser soit des codes correcteurs d'erreur, soit des codes de cryptage. Parmi les codes de cryptage, on peut citer le cryptage dit de courbes elliptiques. Ce type de cryptage utilise des nombres binaires codés sur un grand nombre de bits (classiquement 100 à 200 bits). Les moyens de calcul utilisés à l'heure actuelle sont des processeurs classiques éventuellement couplés avec des circuits dédiés. Si on utilise un processeur classique le temps de calcul est difficilement optimisé. Par contre, l'utilisation de circuits dédiés est plus volumineux et consomme plus d'énergie.

Le document WO-A-98/48345 décrit un circuit de multiplication tel que défini dans le préambule de la revendication 1. Dans ce document, les deuxièmes bascules sont chargées avec les bits du modulo pendant la multiplication dans un corps de Galois et servent de bascules de retenue pendant la multiplication entière.

Un but de l'invention est d'intégrer dans un processeur classique un circuit de multiplication spécifique sans augmenter la taille du processeur de manière importante. L'invention propose un circuit de multiplication à accumulateur modifié pour permettre d'effectuer des multiplications aussi bien classiques que dans les corps de Galois.

L'invention a pour objet un circuit de multiplication comportant un circuit accumulateur constitué d'additionneurs élémentaires à trois entrées, une sortie de résultat et une sortie de retenue, les additionneurs étant reliés entre eux en cascade série par l'intermédiaire de premières bascules, lesdits additionneurs ayant leur sortie de retenue bouclée sur l'une de leurs entrées par l'intermédiaire de deuxièmes bascules associées respectivement à chaque additionneur, caractérisé en ce qu'il comporte des moyens d'annulation pour mettre a zéro le contenu de chacune des deuxièmes bascules pendant le fonctionnement afin de réaliser des multiplication dans un corps de Galois.

Selon un premier mode de réalisation, les moyens d'annulation comportent une porte logique recevant un signal de sélection qui indique dans quel mode de fonctionnement doit fonctionner le circuit de multiplication, et en ce que, lorsque le signal de sélection indique que la multiplication se fait dans un corps de Galois, alors la porte logique force à zéro les deuxièmes bascules.

Selon un deuxième mode de réalisation, les moyens d'annulation comportent une porte logique associée à chacun des couples formés d'un additionneur et d'une deuxième bascule associée. La porte est placée soit entre la sortie de retenue de l'additionneur et une entrée de la deuxième bascule, soit entre une sortie de la deuxième bascule et l'une des entrées de l'additionneur.

L'invention a également pour objet un procédé pour effectuer une multiplication dans un corps de Galois à l'aide d'un circuit de multiplication comportant un circuit accumulateur constitué d'additionneurs élémentaires à trois entrées, une sortie de résultat et une sortie de retenue, les additionneurs étant reliés entre eux en cascade série par l'intermédiaire de premières bascules, lesdits additionneurs ayant leur sortie de retenue bouclée sur l'une de leurs entrées par l'intermédiaire de deuxièmes bascules associées respectivement à chaque additionneur, dans lequel la retenue mémorisée dans chacune des deuxièmes bascules est mise à zéro.

L'invention sera mieux comprise et d'autres particularités et avantages apparaîtront à la lecture de la description qui va suivre, la description faisant référence aux dessins annexés parmi lesquels:
la figure 1 représente un circuit de multiplication à accumulateur selon l'état de la technique,
les figures 2 et 3 représentent des circuits de multiplication selon l'invention.

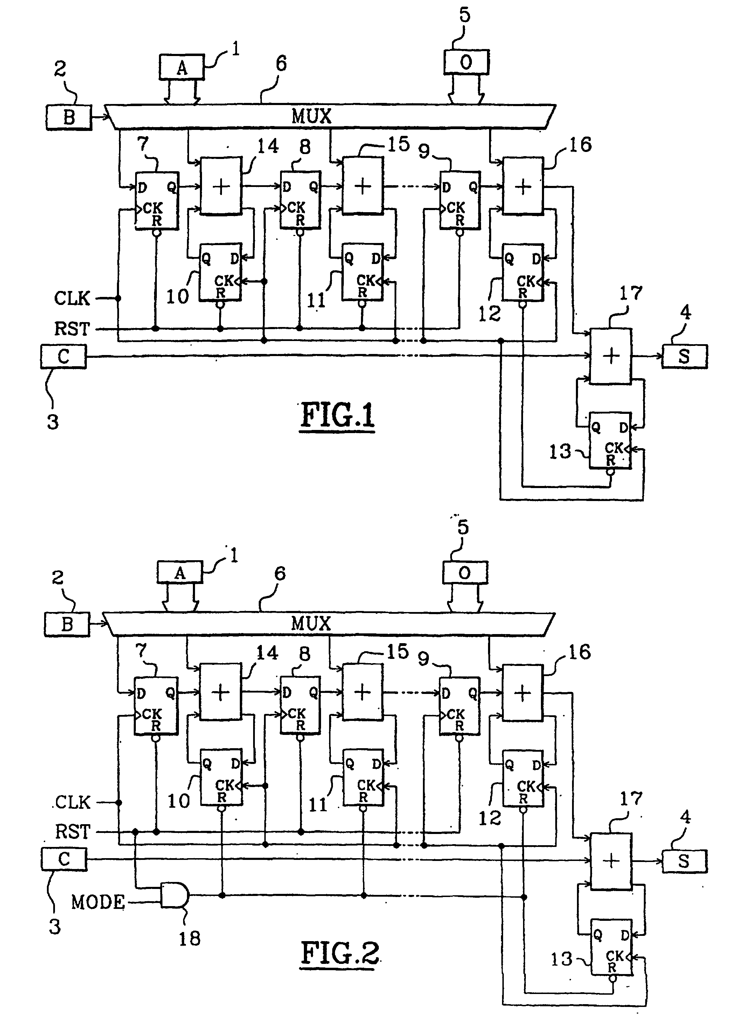

Le schéma de la figure 1 représente un circuit de multiplication à accumulateur (ou circuit de multiplication série). Ce circuit est généralement utilisé dans les processeurs classiques car il permet d'avoir un circuit de multiplication de petite dimension. Ledit circuit de multiplication comporte:
- un premier registre 1 de n bits à sortie parallèle, ledit registre contenant une donnée A;
- un deuxième registre 2 de n bits à décalage et à sortie série, ledit registre contenant une donnée B;
- un troisième registre 3 de n bits à décalage et à sortie série, ledit registre 3 contenant une donnée C;
- un quatrième registre 4 de 2 * n bits à décalage et à entrée série, ledit registre 4 étant destiné à recevoir le résultat S;
- un cinquième registre 5 de n bits à sortie parallèle, ledit registre 5 contenant zéro codé sur n bits;
- un multiplexeur 6 disposant de première et deuxième entrées parallèles de n bits, d'une entrée de sélection et d'une sortie parallèle de n bits, la première entrée étant connectée à la sortie du premier registre 1, la deuxième entrée étant connectée à la sortie dû cinquième registre 5, l'entrée de sélection étant connectée à la sortie du deuxième registre 2;
- des première à (n-1)-ième bascules d'accumulation 7 à 9, par exemple de type D, disposant chacune d'une entrée de donnée, d'une entrée d'horloge, d'une entrée de forçage à zéro et d'une sortie, l'entrée de donnée de la première bascule 7 étant connectée au fil de poids le plus fort de la sortie parallèle du multiplexeur 6;
- des première à n-ième bascules de retenue 10 à 13, par exemple de type D, disposant chacune d'une entrée de donnée, d'une entrée d'horloge, d'une entrée de forçage à zéro et d'une sortie, les entrées d'horloge de toutes les bascules d'accumulation 7 à 9 et de toutes les bascules de retenue 10 à 13 étant connectées ensembles pour recevoir un même signal d'horloge CLK, les entrées de forçage de toutes les bascules d'accumulation 7 à 9 et de toutes les bascules de retenue 10 à 13 étant connectées ensembles pour recevoir un signal de remise à zéro RST;
- des premier à n-ième additionneurs 14 à 17 standards (ou additionneur complet) disposant chacun de première à troisième entrées, d'une sortie de résultat, et d'une sortie de retenue, les premières entrées des premier à (n-1)-ième additionneurs 14 à 16 étant connectées au multiplexeur 6 pour recevoir respectivement les bits de poids n-2 à 0, les deuxièmes entrées des premier à (n-1)-ième additionneurs 14 à 16 étant connectées respectivement aux sorties des première à (n-1)-ième bascules d'accumulation 7 à 9, la première entrée du n-ième additionneur 17 étant connectée à la sortie de résultat du (n-1)-ième additionneur 16, la deuxième entrée du n-ième additionneur 17 étant connectée à la sortie du troisième registre 3, les troisièmes entrées des premier à n-ième additionneurs 14 à 17 étant respectivement connectées aux sorties des première à n-ième bascules de retenue 10 à 13, les sorties de résultat des premier à (n-2)-ième additionneurs 14 à 15 étant respectivement connectées aux entrées de données des deuxième à (n-1)-ième bascules d'accumulation 8 à 9, la sortie de résultat du n-ième additionneur 17 étant connectée à l'entrée du quatrième registre 4, les sorties de retenue des premier à n-ième additionneurs 14 à 17 étant respectivement connectées aux entrées de données des première à n-ième bascules de retenue 10 à 13.

Dans la pratique, les premier à quatrième registres 1 à 4 disposent également d'entrées et/ou sorties parallèles pour échanger des données avec le reste du processeur dans lequel le circuit de multiplication est incorporé. Ces entrées et/ou sorties ne sont pas représentées pour ne pas surcharger inutilement les dessins.

De nombreuses variantes de ce circuit sont possibles. A titre d'exemple, le cinquième registre 5 et le multiplexeur 6 sont généralement remplacés par une série de portes logiques qui assure la même fonction tout en étant de taille plus réduite.

Le troisième registre 3 permet d'effectuer une addition supplémentaire avec le résultat de la multiplication par exemple lorsque l'on effectue une multiplication sur des nombres dont la taille est supérieure à la capacité du circuit de multiplication. Certaines variantes de ce circuit sont moins performantes et ne prévoient pas ce registre.

D'autre variantes de ce circuit permettent de cascader deux (ou plus) circuits de multiplication, pour ce faire, un additionneur complet et une bascule de retenue supplémentaire sont ajoutés en amont de la première bascule d'accumulation pour recevoir des données provenant d'un autre circuit identique.

L'ensemble formé par les additionneurs 14 à 17, les bascules d'accumulation 7 à 9 et les bascules de retenue 10 à 13 forment un circuit accumulateur connu de l'homme du métier et dont le fonctionnement est relativement simple. On additionne successivement soit A soit zéro et le contenu des bascules de retenue 10 à 13 au contenu des bascules d'accumulation 7 à 9, le mot contenu dans les bascules d'accumulation 7 à 9 étant décalé successivement.

Avant de commencer un calcul, on charge les données A et B à multiplier dans les premier et deuxième registres 1 et 2 respectivement. Si on désire effectuer simultanément une addition, alors on charge la donnée C à additionner dans le troisième registre 3, sinon on initialise le troisième registre 3 à zéro. Et, on effectue également une remise à zéro de toutes les bascules d'accumulation et de retenue 7 à 13.

La multiplication s'effectue ensuite en deux temps. Dans un premier temps, qui dure n cycles du signal d'horloge CLK, on décale, à chaque cycle, les données B et C des deuxième et troisième registres 2 et 3 d'un bit. Si le bit sortant du deuxième registre 2 est égal à "1", alors le multiplexeur 6 délivre en sortie la donnée A. Si le bit sortant du deuxième registre 2 est égal à "0" alors le multiplexeur 6 fournit zéro en sortie. Ainsi lors de chaque cycle du signal d'horloge CLK, on additionne soit zéro soit A et un mot de retenue au contenu des bascules d'accumulation 7 à 9, le contenu des bascules d'accumulation 7 à 9 étant lui-même décalé d'un bit, de sorte qu'un bit du résultat S est stocké dans le quatrième registre 4 lors de chaque cycle, et un nouveau mot de retenue est mémorisé dans les bascules de retenue 10 à 13 pour être utilisé lors du prochain cycle..

Dans un deuxième temps, qui dure également n cycles du signal d'horloge, on fournit des "0" en sortie des deuxième et troisième registres afin de sortir le complément du résultat encore contenu dans les bascules d'accumulation 7 à 9.

Si B est codé sur plus de n bits on peut effectuer plusieurs fois le premier temps en changeant entre chaque premier temps le contenu du deuxième registre.

Si A et B sont codés sur plus de n bits, on effectue une première multiplication de B par le mot de poids faible de A. Puis on effectue une deuxième multiplication de B avec le mot de poids supérieur de A tout en additionnant les bits du résultat S précédent sauf les bits de poids faible qui sont déjà significatifs pour le résultat final. Entre chaque exécution du premier temps, il faut changer le mot de B et le mot de C.

Pour plus de détails sur le mode de fonctionnement, l'homme de métier peut se reporter à de nombreux manuels.

L'invention consiste à transformer le circuit de la figure 1 au minimum pour lui permettre d'effectuer des multiplications dans un corps de Galois défini à l'aide d'un polynôme générateur. Pour obtenir le résultat souhaité, il convient de remplacer chaque couple additionneur-bascule de retenue par une porte de type OU-EXCLUSIF. Toutefois si l'on rajoute une porte en parallèle et des moyens de multiplexage pour choisir le mode de fonctionnement du circuit de multiplication, la taille du circuit se trouve fortement augmentée.

La solution apportée par l'invention consiste à annuler le bouclage de la retenue de chaque additionneur. La figure 2 représente un mode de réalisation très simple à mettre en oeuvre dont le surcoût en terme de surface de composant se réduit à une unique porte logique.

Les éléments de la figure 2 ayant les mêmes repères que sur la figure 1 correspondent à des éléments identiques. La figure 2 comporte comme modification l'ajout d'une porte 18 logique à deux entrées et une sortie, par exemple une porte de type ET. L'une des entrées de la porte 18 reçoit le signal de remise à zéro RST, et l'autre des entrées reçoit un signal de sélection MODE indiquant le mode de fonctionnement. Les entrées de remise à zéro des première à n-ième bascules de retenue 10 à 13 sont connectées à la sortie de la porte 18 au lieu de recevoir directement le signal de remise à zéro.

Le fonctionnement du dispositif est très peu modifié par rapport au circuit de la figure 1. En effet, si l'on désire effectuer une multiplication classique, on positionne le signal de sélection MODE à un niveau logique "un", et la multiplication s'effectue comme précédemment indiquée. Si par contre on désire effectuer une multiplication dans un corps de Galois, alors on positionne le signal de sélection MODE à "zéro", ce qui a pour effet de forcer à "zéro" toutes les bascules de retenue, le déroulement d'une multiplication s'effectuant comme une multiplication classique.

Le maintient à "zéro" du signal de sélection MODE a pour effet d'annuler la retenue en permanence par forçage. Un problème de ce dispositif est la forte consommation engendrée lors de chaque front actif du signal d'horloge CLK. En effet, lors de chaque front actif, la bascule va effectuer une mémorisation tout en étant forcée à zéro. Si la retenue à mémoriser est un "un" logique alors des transistors complémentaires vont se trouver en conduction simultanée pendant une brève durée ce qui entraîne une sur-consommation du circuit.

Une technique simple pour remédier à ce problème consiste à ne pas maintenir le signal de sélection actif en permanence. Il suffit d'envoyer une impulsion après chaque front actif du signal d'horloge pour annuler la retenue mémorisée. La réalisation d'un tel mécanisme peut se faire en utilisant un générateur d'impulsion déclenché par exemple sur les fronts inactifs du signal d'horloge. Le forçage est alors effectué lors de chaque cycle du signal d'horloge au lieu d'être permanent.

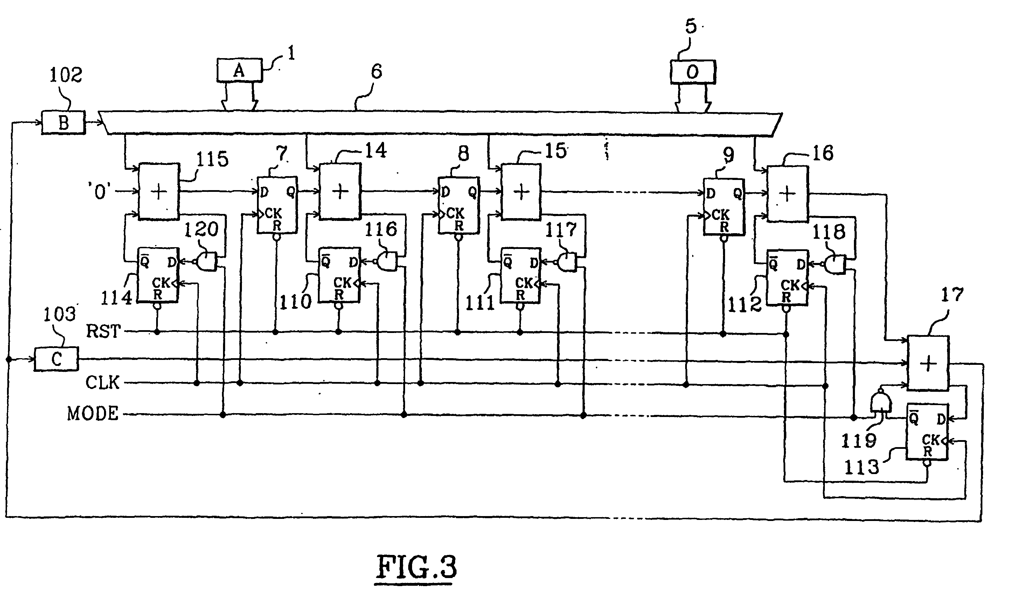

La figure 3 représente une variante de l'invention. Le mode de réalisation représenté sur la figure 3 est un peu plus complexe en terme de surface de circuit intégré mais permet d'obtenir une consommation réduite. Par ailleurs, différentes variantes de réalisation du circuit de multiplication ont été représentées. Les éléments de la figure 3 ayant les mêmes repères que sur la figure 1 correspondent à des éléments identiques.

Le circuit de multiplication de la figure 3 est modifié par rapport au circuit de la figure 1 comme indiqué ci-après.

Les deuxième à quatrième registres 2 à 4 ont été remplacés par des deuxième et troisième registres 102 et 103 de n bits disposant d'une entrée série connectée à la sortie de résultat du n-ième additionneur 17. Cette modification permet d'économiser 2 * n bascules mais complique un peu le fonctionnement du circuit. Cette modification, déjà connue de l'homme du métier, permet de stocker le résultat S dans les deuxième et troisième registres dès que les données de ces registres sont utilisées. Comme le sait l'homme du métier, des multiplexeurs (non représentés) sont nécessaires en entrée et/ou en sortie de ces registres afin d'éviter de réintroduire le résultat mémorisé dans lesdits registres lorsque ces registres doivent fournir des zéros.

Les première à n-ième bascules de retenue 10 à 13 sont remplacées par des première à n-ième bascules de retenue 110 à 113 disposant d'une sortie inverseuse à la place d'une sortie normale.

Une (n+1)-ième bascule de retenue 114 et un (n+1)-ième additionneur 115 élémentaire ont été rajoutés. Une première entrée du (n+1)-ième additionneur 115 est connectée au multiplexeur 6 à la place de la première bascule d'accumulation 7. Une sortie de résultat du (n+1)-ième additionneur 115 est connectée à l'entrée de donnée de la première bascule d'accumulation 7. Une deuxième entrée du (n+1)-ième additionneur 115 reçoit un "zéro" logique. Une troisième entrée du (n+1)-ième additionneur 115 est connectée à la sortie de la (n+1)-ième bascule de retenue 114. Une entrée d'horloge de la (n+1)-ième bascule de retenue 114 reçoit le signal d'horloge CLK. Une entrée de forçage à zéro de la (n+1)-ième bascule de retenue 114 reçoit le signal de remise à zéro RST. L'ajout de la (n+1)-ième bascule de retenue 114 et du (n+1)-ième additionneur 115 a pour but de permettre une mise en cascade de circuit de multiplication. Il suffit de connecter la sortie d'un autre circuit de multiplication sur la deuxième entrée du (n+1)-ième additionneur 115, le "zéro" devant être reçu sur la deuxième entrée lorsque le circuit de multiplication est utilisé seul.

Des première à (n+1)-ième portes logiques 116 à 120 sont respectivement associées aux première à (n+1)-ième bascules de retenues 110 à 114. Les portes logiques 116 à 120 utilisées sont de type ET-NON et disposent de première et deuxième entrées et d'une sortie. Les premières entrées des première à (n-1)-ième et (n+1)-ième portes logiques 116 à 118 et 120 sont respectivement connectées aux sorties de retenue des premier à (n-1)-ième et (n+1)-ième additionneurs 14 à 16 et 115. la première entrée de la n-ième porte logique 119 est connectée à la sortie de la n-ième bascule de retenue 113. Les deuxièmes entrées des première à (n+1)-ième portes logiques 116 à 120 sont connectées ensembles et reçoivent le signal de sélection MODE. Les sorties des première à (n-1)-ième et (n+1)-ième portes logiques 116 à 118 et 120 sont respectivement connectées aux entrées de donnée des première à (n-1)-ième et (n+1)-ième bascules de retenue 110 à 112 et 114. La sortie de la n-ième porte logique 119 est connectée à la troisième entrée du n-ième additionneur 17.

Les première à (n+1)-ième portes logiques 116 à 120 ont pour fonction d'annuler la retenue sur le trajet de bouclage de chaque additionneur 14 à 17 et 115. Ces portes logiques 116 à 120 peuvent indifféremment se placer à l'entrée ou à la sortie de chacune des bascules de retenue 110 à 114. Dans l'exemple préféré représenté figure 3, les portes logiques 116 à 120 sont de type ET-NON car se sont les plus petites et les plus rapides en technologie CMOS. Il est à noter que l'utilisation de portes inverseuses entraîne l'utilisation de sortie inverseuse sur les bascules de retenues. Si les portes utilisées sont non-inverseuses, il est préférable d'utiliser des bascules de retenue à sortie non-inverseuse.

Le fonctionnement du circuit de la figure 3 est similaire au fonctionnement du circuit de la figure 2. Le signal de sélection MODE valide le fonctionnement en circuit de multiplication classique lorsqu'il est à un niveau logique "un", et il valide le fonctionnement en circuit de multiplication dans un corps de Galois lorsqu'il est à un niveau logique "zéro".

La différence de fonctionnement entre les circuits des figures 2 et 3 réside essentiellement dans la mise en oeuvre de l'annulation de la retenue. Dans le circuit de la figure 3, la retenue est annulée sur le trajet de bouclage de la retenue à l'aide d'une porte logique dont la consommation statique est quasi-nulle. La consommation du circuit de la figure 3 est donc beaucoup moins importante que la consommation du circuit de la figure 2 car il n'y a pas de forçage permanent ni de génération d'un signal cyclique de forçage.

## Revendications

1. Circuit de multiplication comportant un circuit accumulateur constitué d'additionneurs (14 à 17) élémentaires à trois entrées, une sortie de résultat et une sortie de retenue, les additionneurs (14 à 17) étant reliés entre eux en cascade série par l'intermédiaire de premières bascules (7 à 9), lesdits additionneurs (14 à 17) ayant leur sortie de retenue bouclée sur l'une de leurs entrées par l'intermédiaire de deuxièmes bascules (10 à 13) associées respectivement à chaque additionneur (14 à 17), **caractérisé en ce qu'**il comporte des moyens d'annulation (18, 116 à 120) pour mettre à zéro le contenu de chacune des deuxièmes bascules (10 à 13) pendant le fonctionnement afin de réaliser des multiplication dans un corps de Galois.

2. Circuit selon la revendication 1, **caractérisé en ce que** les moyens d'annulation comportent une porte logique (18) recevant un signal de sélection (MODE) qui indique dans quel mode de fonctionnement doit fonctionner le circuit de multiplication, et **en ce que**, lorsque le signal de sélection (MODE) indique que la multiplication se fait dans un corps de Galois, alors la porte logique (18) force à zéro les deuxièmes bascules (10 à 13).

3. Circuit selon la revendication 1, **caractérisé en ce que** les moyens d'annulation comportent une porte logique (116 à 120) associée à chacun des couples formés d'un additionneur (14 à 16, 115) et d'une deuxième bascule (110 à 114) associée.

4. Circuit selon la revendication 3, **caractérisé en ce que** la porte (116 à 120) est placée entre-la sortie de retenue de l'additionneur (14 à 16, 115) et une entrée de la deuxième bascule (110 à 114).

5. Circuit selon la revendication 3, **caractérisé en ce que** la porte (116 à 120) est placée entre une sortie de la deuxième bascule (110 à 114) et l'une des entrées de l'additionneur (14 à 16, 115).

6. Circuit selon l'une des revendications 3 à 5, **caractérisé en ce que** la porte logique (116 à 120) est inverseuse, et **en ce que** la sortie de la bascule (110 à 114) est une sortie inverseuse.

7. Procédé pour effectuer une multiplication dans un corps de Galois à l'aide d'un circuit de multiplication comportant un circuit accumulateur constitué d'additionneurs élémentaires (14 à 17) à trois entrées, une sortie de résultat et une sortie de retenue, les additionneurs (14 à 17) étant reliés entre eux en cascade série par l'intermédiaire de premières bascules (7 à 9), lesdits additionneurs (14 à 17) ayant leur sortie de retenue bouclée sur Tune de leurs entrées par l'intermédiaire de deuxièmes bascules (10 à 13) associées respectivement à chaque additionneur (14 à 17), dans lequel la retenue mémorisée dans chacune des deuxièmes bascules (10 à 13) est mise à zéro.

8. Procédé selon la revendication 7, **caractérisé en ce que** la retenue est annulée par forçage à zéro de chacune des deuxièmes bascules (10 à 13).

9. Procédé selon la revendication 8, **caractérisé en ce que** le forçage est effectué lors de chaque cycle d'un signal d'horloge (CLK).

10. Procédé selon la revendication 7, **caractérisé en ce que** la retenue est annulée sur le parcours entre la sortie de retenue de chaque additionneur (14 à 16, 115) et Tune des entrée de chaque additionneur (14 à 16, 115) à l'aide d'une porte logique (116 à 120) s'intercalant entre l'additionneur (14 à 16, 115) et la deuxième bascule (110 à 114) associée:

## Claims

1. A multiplication circuit comprising an accumulator circuit consisting of elementary adders (14 to 17) having three inputs, a resultant output and a retained signal output, the adders (14 to 17) being connected together in a serial cascade through first flip-flops (7 to 9), the said adders (14 to 17) having their retained signal output looped on one of their inputs through second flip-flops (10 to 13) which are associated respectively with each adder (14 to 17), **characterised in that** it includes cancelling means (18, 116 to 120) for zeroing the content of each of the second flip-flops (10 to 13) during operation to perform multiplications in a Galois body.

2. A circuit according to Claim 1, **characterised in that** the cancelling means comprise a logic gate (18) receiving a selection signal (MODE) which indicates the mode in which the multiplication circuit is to operate, and **in that**, when the selection signal (MODE) indicates that the multiplication is to be in a Galois body, the logic gate (18) then forces the second flip-flops (10 to 13) to zero.

3. A circuit according to Claim 1, **characterised in that** the cancelling means comprise a logic gate (116 to 120) associated with each of the pairs consisting of one adder (14 to 16, 115) and an associated second flip-flop (110 to 114).

4. A circuit according to Claim 3, **characterised in that** the gate (116 to 120) is connected between the retained signal output of the adder (14 to 16, 115) and one input of the second flip-flop (110 to 114).

5. A circuit according to Claim 3, **characterised in that** the gate (116 to 120) is connected between an output of the second flip-flop (110 to 114) and one of inputs of the adder (14 to 16, 115).

6. A circuit according to one of Claims 3 to 5, **characterised in that** the logic gate (116 to 120) is inverting, and **in that** the output of the flip-flop (110 to 114) is an inverting output.

7. A method for carrying out a multiplication in a Galois body with the aid of a multiplication circuit comprising an accumulator circuit which consists of elementary adders (14 to 17) having three inputs, a resultant output and a retained signal output, the adders (14 to 17) being connected together in a serial cascade through first flip-flops (7 to 9), the said adders (14 to 17) having their retained signal output looped on one of their inputs through second flip-flops (10 to 13) which are associated respectively with each adder (14 to 17), wherein the retained signal memorised in each of the second flip-flops (10 to 13) is zeroed.

8. A method according to Claim 7, **characterised in that** the retained signal is cancelled by forcing each of the second flip-flops (10 to 13) to zero.

9. A method according to Claim 8, **characterised in that** the forcing operation is carried out in each cycle of a clock signal (CLK).

10. A method according to Claim 7, **characterised in that** the retained signal is cancelled on the path between the retained signal output of each adder (14 to 16, 115) and one of the inputs of each adder (14 to 16, 115), with the aid of a logic gate (116 to 120) which is interposed between the adder (14 to 16, 115) and the associated second flip-flop (110 to 114).

## Patentansprüche

1. Multiplikationsschaltkreis mit
einem Akkumulatorschaltkreis aus Elementaraddierern (14 bis 17) mit drei Eingängen, einem Ergebnisausgang und einem Überlaufausgang, wobei
die Addierer (14 bis 17) untereinander kaskadenförmig über erste Kippstufen (7 bis 9) seriell verbunden sind,
bei den Addierern (14 bis 17) der Überlaufausgang zu einem ihrer Eingänge über zweite Kippstufen (10 bis 13), die jeweils zu jedem Addierer (14 bis 17) gehören, zurückgeschleift ist,
**gekennzeichnet durch**
Annullierungsmittel (18, 116 bis 120) zum Nullsetzen des Inhalts jeder der zweiten Kippstufen (10 bis 13) im Betrieb, um Multiplikationen auf dem Galois-Körper durchzuführen.

2. Schaltkreis nach Anspruch 1,
**dadurch gekennzeichnet, dass**
die Annullierungsmittel ein Logikgatter (18) umfassen, das ein Auswahlsignal (MODE) einliest, welches anzeigt, in welchem Betriebsmodus der Multiplikationsschaltkreis arbeiten muss, und
wenn das Auswahlsignal (MODE) anzeigt, dass die Multiplikation auf dem Galois-Körper erfolgt, das Logikgatter (18) die zweiten Kippstufen (10 bis 13) auf Null setzt.

3. Schaltkreis nach Anspruch 1,
**dadurch gekennzeichnet, dass**
die Annullierungsmittel ein Logikgatter (116 bis 120) umfassen, das zu jedem Paar aus einen Addierer (14 bis 16, 115) und einer dazugehörigen Kippstufe (110 bis 114) gehört.

4. Schaltkreis nach Anspruch 3,
**dadurch gekennzeichnet, dass**
das Gatter (116 bis 120) zwischen dem Überlaufausgang des Addierers (14 bis 16, 115) und einem Eingang der zweiten Kippstufe (110 bis 114) angeordnet ist.

5. Schaltkreis nach Anspruch 3,
**dadurch gekennzeichnet, dass**
das Gatter (116 bis 120) zwischen einem Ausgang der zweiten Kippstufe (110 bis 114) und einem der Eingänge des Addierers (14 bis 16, 115) angeordnet ist.

6. Schaltkreis nach einem der Ansprüche 3 bis 5,
**dadurch gekennzeichnet, dass**
das Logikgatter (116 bis 120) invertiert und
der Ausgang der Kippstufe (110 bis 114) ein Inverterausgang ist.

7. Verfahren zum Ausführen einer Multiplikation auf einem Galois-Körper mit einem Multiplikationsschaltkreis mit
einem Akkumulatorschaltkreis aus Elementaraddierern (14 bis 17) mit drei Eingängen, einem Ergebnisausgang und einem Überlaufausgang, wobei
die Addierer (14 bis 17) untereinander kaskadenförmig über erste Kippstufen (7 bis 9) seriell verbunden sind,
bei den Addierern (14 bis 17) der Überlaufausgang zu einem ihrer Eingänge über zweite Kippstufen (10 bis 13), die jeweils zu jedem Addierer (14 bis 17) gehören, zurückgeschleift ist,
bei dem
der Überlauf, der in jeder der zweiten Kippstufen (10 bis 13) gespeichert ist, Null gesetzt wird.

8. Verfahren nach Anspruch 7,
**dadurch gekennzeichnet, dass**
der Überlauf annulliert wird, indem jeder der zweiten Kippstufen (10 bis 13) auf Null gesetzt wird.

9. Verfahren nach Anspruch 8,
**dadurch gekennzeichnet, dass**
das Setzen bei jedem Zyklus eines Taktsignals (CLK) durchgeführt wird.

10. Verfahren nach Anspruch 7,
**dadurch gekennzeichnet, dass**
der Überlauf auf dem Weg zwischen dem Überlaufausgang jedes Addierers (14 bis 16, 115) und einem der Eingänge jedes Addieres (14 bis 16, 115) mittels eines Logikgatters (116 bis 120) annulliert wird, das sich zwischen dem Addierer (14 bis 16, 115) und der dazugehörigen zweiten Kippstufe (110 bis 114) befindet.
